# EUROPÄISCHE PATENTSCHRIFT

(11) **EP 4 126 714 B1**
(45) Veröffentlichungstag und Bekanntmachung des Hinweises auf die Patenterteilung: **16.08.2023**
(21) Anmeldenummer: 21719848.0
(22) Anmeldetag: 12.03.2021
(51) Int. Cl.: B65G 15/34, B29D 29/06, F16G 3/00

(54) **PROZESSBAND MIT EINEM FLÄCHENGEFÜGE, VORRICHTUNG MIT UMLAUFENDEM ENDLOSBAND UND VERWENDUNG EINES PROZESSBANDES**
PROCESS BELT HAVING A PLANAR STRUCTURE, APPARATUS COMPRISING A REVOLVING ENDLESS BELT, AND USE OF A PROCESS BELT
BANDE DE TRAITEMENT PRÉSENTANT UNE STRUCTURE PLANE, DISPOSITIF COMPORTANT UNE BANDE SANS FIN ROTATIVE ET UTILISATION D'UNE BANDE DE TRAITEMENT

(30) Priorität: 27.03.2020 DE 102020001958; 13.07.2020 DE 102020004186
(43) Veröffentlichungstag der Anmeldung: 08.02.2023
(73) Patentinhaber: GKD - Gebr. Kufferath AG, 52353 Düren (DE)
(72) Erfinder: ESSER, Frank, 52353 Düren (DE); PAULY, Alexander, 52372 Kreuzau (DE)
(74) Vertreter: Castell, Klaus
(86) Internationale Anmeldenummer: PCT/DE2021/000047
(87) Internationale Veröffentlichungsnummer: WO 2021/190680

(56) Entgegenhaltungen:
- EP-A1- 1 093 908
- CN-A- 108 790 328
- DE-A1- 2 621 706
- DE-A1- 2 934 782
- DE-A1- 10 337 397
- DE-A1-102010 060 574
- DE-A1-102016 107 811
- GB-A- 950 287
- JP-U- S56 144 013
- US-A- 3 612 256
- US-A1- 2012 289 371

## Beschreibung

Die Erfindung betrifft einen Prozessband mit einem Flächengefüge, das als Endlosband mit einer inneren und äußeren Oberfläche ausgebildet ist, wobei die äußere Oberfläche Glasfasern und zumindest eine Glasfaser aufweist.

Prozessbänder werden als Endlosbänder über mindestens zwei Umlenkrollen geführt und sie haben eine radial innenliegende Innenseite und eine radial außenliegende äußere Oberfläche. Nur die äußere Oberfläche kommt mit einem zu behandelnden Gut in Berührung. Dabei soll das zu behandelnde Gut durch das Prozessband nicht beeinträchtigt werden. Für eine schonende Berührung zwischen Prozessband und zu behandelndem Gut wurde vorgeschlagen, an der äußeren Oberfläche des Proessbandes eine Glasfaser vorzusehen. Hierfür wurden Gewebe vorgeschlagen, die in Längsrichtung des Prozessbandes und somit in Kettrichtung Glasfasern aufweisen. Diese Glasfasern sind vorzugsweise derart in das Prozessband integriert, das das zu behandelnde Gut nur mit den Glasfasern des Prozessbandes in Berührung kommt.

Es hat sich herausgestellt, dass sich bei derartigen Prozessbändern die Glasfasern verschieben können. Auch eine Verklebung der Glasfasern durch eine Beschichtung kann eine Verschiebung der Glasfasern innerhalb des Prozessbandes nicht vollständig eliminieren. DE2934782A1 offenbart ein Prozessband gemäß dem Oberbegriff des Anspruchs 1.

Der Erfindung liegt daher die Aufgabe zugrunde, ein gattungsgemäßes Prozessband mit Glasfasern so weiterzuentwickeln, dass es auch nach längerem Gebrauch seine Eigenschaften nicht verändert.

Diese Aufgabe wird mit einem gattungsgemäßen Prozessband gemäß Anspruch 1 gelöst, bei dem in Längsrichtung Metallfasern angeordnet sind.

Im Rahmen der Erfindung sind Fasern monofil oder multifil, Drähte oder Seile und sie können aus unterschiedlichen Materialien oder Materialkombinationen hergestellt sein. Die in Längsrichtung des Prozessbandes angeordneten Metallfasern sorgen dafür, dass die Glasfasern nicht seitlich verrutschen und fest im Flächengefüge gehalten werden.

Derartige Prozessbänder eignen sich besonders für Trockner und insbesondere für Trockner in der Vliesindustrie. Diese Prozessbänder können luftdurchlässig sein und vorzugsweise mit PTFE beschichtete Glasfasern verhindern ein Ankleben des zu behandelnden Produktes am Prozessband.

Die Metallfasern können in Längsrichtung des Prozessbandes diagonal zum Prozessband oder auch direkt längs des Prozessbandes angeordnet sein. Erfindungsgemäß sind die Metallfasern parallel zur Glasfaser angeordnet.

Um sicherzustellen, dass die äußere Oberfläche des Prozessbandes von der Glasfaser dominiert wird, weisen die Metallfasern einen kleineren Durchmesser als die Glasfaser auf.

Die Längsrichtung des Prozessbandes entspricht deren Umlaufrichtung und die Metallfasern können zusätzlich auch quer zur Längsrichtung des Prozessbandes verlaufende Metallfasern aufweisen. Dies können beispielsweise bei einem Gewebe vorzugsweise Metalldrähte oder Seile sein.

Damit sichergestellt ist, dass die Kontaktpunkte zum zu behandelnden Produkt nur von den Glasfasern gebildet werden, wird erfindungsgemäß vorgesehen, dass die Glasfasern die Oberfläche des Flächengefüges bilden und die Metallfasern hinter der Oberfläche des Flächengefüges zurück bleiben.

Das Flächengefüge wird in der Regel zu einem Endlosband geformt, indem gegenüberliegende Enden eines rechteckigen Flächengefüges miteinander verbunden werden. Diese Verbindungsstelle wird als Naht bezeichnet. Dort können die Enden miteinander vernäht werden. Um eine besonders sichere stabile Verbindung herzustellen, wird vorgeschlagen, dass das Flächengefüge quer zur Längsrichtung eine Verbindung aufweist, an der die Metallfasern verschweißt sind.

Besonders vorteilhaft ist es, wenn zumindest einige der Metallfasern an einem Ende eine Öse aufweisen, um sie mit ihrem anderen Ende zu verbinden.

Diese Verbindungsnaht sollte am zu behandelnden Produkt keine Markierungen oder Abdrücke hinterlassen. Daher wird vorgeschlagen, dass das Flächengefüge quer zur Längsrichtung eine Verbindung aufweist, die hinter der Oberfläche des Flächengefüges derart zurückliegt, dass das Prozessband keine Abdrücke an einem anliegenden Produkt bewirkt. Vorzugsweise ist das Prozessband hierfür im Bereich der Verbindung weniger dick als in den übrigen Bereichen.

Als besonders vorteilhaft hat es sich erwiesen, wenn beidseitig einer Glasfaser eine Metallfaser angeordnet ist. Die Metallfaser ist dabei vorzugsweise nicht in die Glasfaser integriert, sondern die Glasfaser liegt monofil oder multifil als eigener Strang vor, während auf jeder Seite dieser Glasfaser eine Metallfaser angeordnet ist.

Es muss nicht zwischen jeder einzelnen Glasfaser eine Metallfaser angeordnet sein, sondern es kann auch zwischen mehreren Glasfasern eine Metallfaser angeordnet sein, die dann ein Verrutschen der mehreren Glasfasern verhindern und dem Flächengefüge in Längsrichtung Stabilität verleihen.

Vorteilhaft ist es, wenn zumindest einige der Glasfasern multifil sind. Als Multifilament kann beispielsweise ein Garn oder ein Seil vorgesehen sein.

Außerdem ist es vorteilhaft, wenn zumindest einige der Metallfasern Drähte sind.

Die Metallfasern können magnetische oder nichtmagnetische Werkstoffe aufweisen. Vorteilhaft ist es, wenn die Metallfasern magnetische und nichtmagnetische Fasern aufweisen.

Das Flächengefüge kann ein Spiralgewebe, ein Vlies, ein Gewirk oder ein Gestrick sein. Erfindungsgemäß ist vorgesehen, dass das Flächengefüge ein Gewebe ist.

Dabei ist es besonders vorteilhaft, wenn die Glasfaser eine Kette des Gewebes bildet. Erfindungsgemäß ist vorgesehen, dass die Metallfaser eine Kette des Gewebes bildet.

Als Antihaftbeschichtung wird erfindungsgemäß vorgesehen, dass das Flächengefüge vollflächig mit einem Fluorpolymer beschichtet ist. Die Beschichtung verhindert das Aufspleißen multifiler Glasfasern und verhindert ein Verkleben von Prozessband und Produkt.

Insbesondere für die Verwendung des Prozessbandes in Trocknungsanlagen wird erfindungsgemäß vorgesehen, dass das Flächengefüge mehr als 30 % freie Durchgangsfläche aufweist. Dieses Prozessband hat daher Öffnungen im Prozessband, die mindestens 30 % der Fläche des Flächengefüges beziehungsweise des Prozessbandes ausmachen.

Ein besonders vorteilhaftes Ausführungsbeispiel ist in der Zeichnung dargestellt und wird im Folgenden näher beschrieben. Es zeigt:
- Figur 1: einen Ausschnitt eines Flächengefüges eines erfindungsgemäßen Prozessbandes,
- Figur 2: einen Ausschnitt des in Figur 1 gezeigten Flächengefüges an der Nahtstelle und

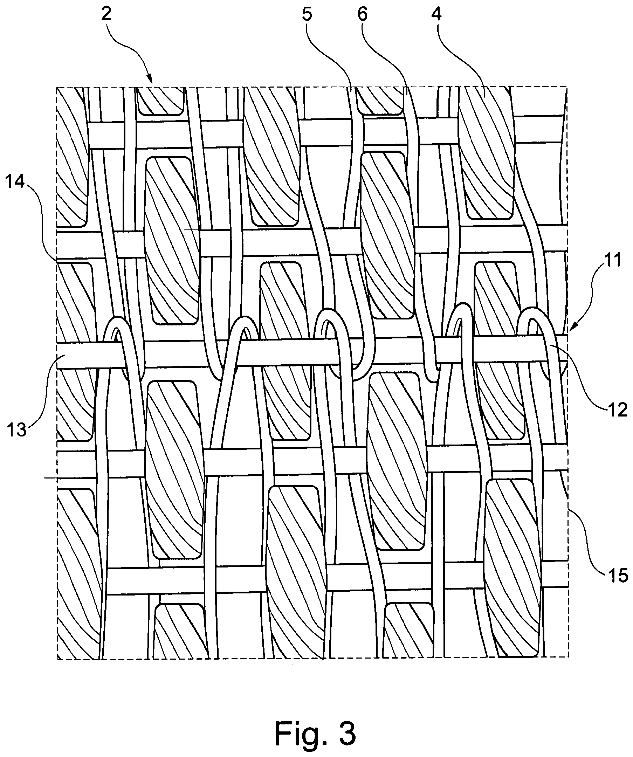

- Figur 3: eine vergrößerte Darstellung eines Ausschnitts aus der Figur 2 im Bereich der Nahtstelle.

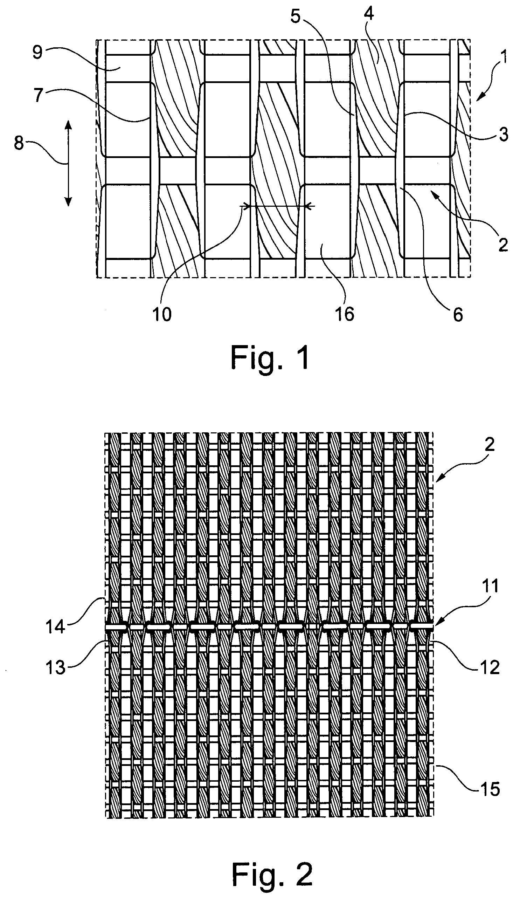

Das in Figur 1 gezeigte Prozessband 1 ist ein Flächengefüge 2, das als Gewebe 3 ausgebildet ist. In diesem Gewebe 3 bildet eine Glasfaser 4 eine Kette des Gewebes 3 und seitlich zur Glasfaser 4 ist ebenfalls als Kette jeweils eine Metallfaser 5, 6 eingewebt.

Die in der Abbildung hinten liegende Oberfläche dieses Flächengefüges 2 bildet bei der Verwendung des Flächengefüges als Prozessband die innere Oberfläche (nicht gezeigt) und die in Figur 1 gezeigte Oberfläche bildet die äußere Oberfläche 7 des Flächengefüges. Die Längsrichtung 8 des Prozessbandes 1 verläuft in Richtung der Glasfasern 4, wobei die Glasfasern 4 und die Metallfasern 5, 6 jeweils eine Kette des Gewebes bilden. Quer dazu bilden Metalldrähte 9 jeweils den Schuss des Gewebes 3.

Die Figur 1 zeigt, dass jeweils in Richtung eines Schusses 9 jede zweite Glasfaser 4 beidseitig von Metalldrähten 5, 6 gehalten wird. In Längsrichtung der Glasfaser 4 wird die Glasfaser jeweils an jedem zweiten Schuss 9 beidseitig an der Oberfläche 7 durch einen Metalldraht 5, 6 gehalten.

Die im Ausführungsbeispiel als Drähte ausgebildeten Metallfasern laufen somit parallel zur Glasfaser 4.

Außerdem haben die Metallfasern einen deutlich kleineren Durchmesser als die Glasfaser. Der Durchmesser der Metallfasern liegt bei weniger als einem Drittel des Durchmessers 10 der Glasfaser. Die im Ausführungsbeispiel gezeigten Schussdrähte 9 bilden somit quer zur Längsrichtung 8 des Prozessbandes 1 verlaufende Metallfasern.

Durch die besondere Dicke der Glasfasern 4 bilden in dem in Figur 1 gezeigten Gewebe 3 die Glasfasern 4 die Oberfläche 7 des Flächengefüges 2 und die Metallfasern 5, 6 bleiben hinter der Oberfläche 7 des Flächengefüges 2 zurück.

In der Figur 2 ist eine Verbindung 11 gezeigt, an der die Enden der Metallfasern 5, 6 jeweils eine Öse 12 aufweisen. Zur Bildung der Öse 12 ist das Ende der Metallfaser 5, 6 mit sich selbst verschweißt. Dadurch entstehen eine Vielzahl an nebeneinanderliegenden Ösen, die teils dem einen Ende des Flächengefüges und teils dem anderen Ende des Flächengefüges zuzuordnen sind. Ein sich durch diese Ösen erstreckender stabiler Draht 13 verläuft durch die einzelnen Ösen, um das eine Ende 14 des Flächengefüges 2 mit dem anderen Ende 15 dieses Flächengefüges zu verbinden.

Anstelle über die Ösen 12 und dem Metalldraht 13 könnten die Enden der Metallfasern 5, 6 auch direkt miteinander verschweißt werden. Die Ösen 12 erlauben jedoch eine revisibele Verbindung der Enden 14 und 15 des Flächengefüges 2.

Außerdem ist die Verbindung so ausgebildet, dass sie hinter der äußeren Oberfläche 7 des Flächengefüges 2 derart zurückliegt, dass das Prozessband 1 keine Abdrücke an einem anliegenden Produkt (nicht gezeigt) bewirkt.

Im Ausführungsbeispiel sind die Metallfasern monofile Drähte, während die Glasfasern multifil als leichtgewundener Glasfaserstrang ausgebildet sind.

Nicht sichtbar ist, dass das Flächengefüge 2 vollflächig mit einem Fluorpolymer beschichtet ist.

Die lockere Ausbildung des Gewebes 3 mit den größeren Abständen 16 zwischen den Glasfasern 4 führt dazu, dass das Flächengefüge 2 eine freie Durchgangsfläche von fast 50 % aufweist. Dadurch eignet sich das Flächengefüge besonders gut als Endlosband zum Trocknen von Produkten, wie insbesondere in der Vliesindustrie.

## Patentansprüche

1. Prozessband (1) mit einem Flächengefüge (2), wobei die äußere Oberfläche (7) mindestens eine Glasfaser (4) aufweist und in Längsrichtung (8) des Prozessbandes (1) Metallfasern (5, 6) angeordnet sind, wobei die Metallfasern (5, 6) parallel zur Glasfaser (4) angeordnet sind und einen kleineren Durchmesser (10) als die Glasfaser (4) aufweisen, wobei das Flächengefüge (2) ein Gewebe (3) ist,
wobei die Glasfaser (4) oder die Metallfaser (5,6) eine Kette des Gewebes (3) bildet,
*d**adurch gekennzeichnet, dass*** es als Endlosband mit einer inneren und einer äußeren Oberfläche (7) ausgebildet ist, die Glasfasern (4) die Oberfläche (7) des Flächengefiiges (2) bilden und die Metallfasern (5, 6) hinter der Oberfläche (7) des Flächengefüges (2) zurück bleiben, das Flächengefüge (2) vollflächig mit einem Fluorpolymer beschichtet ist und mehr als 30 % freie Durchgangsfläche aufweist.

2. Prozessband nach Anspruch 1, ***dadurch gekennzeichnet, dass*** es quer zur Längsrichtung (8) des Prozessbandes (1) verlaufende Metallfasern (9) aufweist.

3. Prozessband nach einem der vorhergehenden Ansprüche, ***dadurch gekennzeichnet, dass*** das Flächengefüge (2) quer zur Längsrichtung eine Verbindung (11) aufweist, an der die Metallfasern (5, 6) verschweißt sind.

4. Prozessband nach einem der vorhergehenden Ansprüche, ***dadurch gekennzeichnet, dass*** zumindest einige der Metallfasern (5, 6) an einem Ende eine Öse (12) aufweisen.

5. Prozessband nach einem der vorhergehenden Ansprüche, ***dadurch gekennzeichnet, dass*** das Flächengefüge (2) quer zur Längsrichtung eine Verbindung (11) aufweist, die hinter der äußeren Oberfläche (7) des Flächengefüges (2) derart zurückliegt, dass das Prozessband (1) keine Abdrücke an einem anliegenden Produkt bewirkt.

6. Prozessband nach einem der vorhergehenden Ansprüche, ***dadurch gekennzeichnet, dass*** beidseitig einer Glasfaser (4) eine Metallfaser (5, 6) angeordnet ist.

7. Prozessband nach einem der vorhergehenden Ansprüche, ***dadurch gekennzeichnet, dass*** zwischen mehreren Glasfasern (4) eine Metallfaser (5, 6) angeordnet ist.

8. Prozessband nach einem der vorhergehenden Ansprüche, ***dadurch gekennzeichnet, dass*** zumindest einige der Glasfasern (4) multifil sind.

9. Prozessband nach einem der vorhergehenden Ansprüche, ***dadurch gekennzeichnet, dass*** zumindest einige der Metallfasern (5, 6) Drähte sind.

10. Prozessband nach einem der vorhergehenden Ansprüche, ***dadurch gekennzeichnet, dass*** die Metallfasern (5, 6) magnetische und nichtmagnetische Fasern aufweisen.

## Claims

1. Process belt (1) having a planar structure (2), wherein the outer surface (7) has at least one glass fibre (4) and metal fibres (5, 6) are arranged in the longitudinal direction (8) of the process belt (1), wherein the metal fibres (5, 6) are arranged parallel to the glass fibre (4) and have a smaller diameter (10) than the glass fibre (4), wherein the planar structure (2) is a woven fabric (3), wherein the glass fibre (4) or the metal fibre (5, 6) form a warp of the woven fabric (3), ***characterized in that*** it is configured as an endless belt with an inner and an outer surface (7), the glass fibres (4) form the surface (7) of the planar structure (2) and the metal fibres (5, 6) remain back behind the surface (7) of the planar structure (2), the planar structure (2) is coated with a fluoropolymer over its entire surface and has more than 30 % free passage surface.

2. Process belt according to Claim 1, ***characterized in that*** it has metal fibres (9) running transversely to the longitudinal direction (8) of the process belt (1).

3. Process belt according to one of the preceding claims, ***characterized in that*** the planar structure (2) has a connection (11) transverse to the longitudinal direction to which the metal fibres (5, 6) are welded.

4. Process belt according to one of the preceding claims, ***characterized in that*** at least some of the metal fibres (5, 6) have an eye (12) at one end.

5. Process belt according to one of the preceding claims, ***characterized in that*** the planar structure (2) has a connection (11) transverse to the longitudinal direction which lies behind the outer surface (7) of the planar structure (2) in such a manner that the process belt (1) does not produce any imprints on an abutting product.

6. Process belt according to one of the preceding claims, ***characterized in that*** a metal fibre (5, 6) is arranged on both sides of a glass fibre (4).

7. Process belt according to one of the preceding claims, ***characterized in that*** a metal fibre (5, 6) is arranged between a plurality of glass fibres (4).

8. Process belt according to one of the preceding claims, ***characterized in that*** at least some of the glass fibres (4) are multifil.

9. Process belt according to one of the preceding claims, ***characterized in that*** at least some of the metal fibres (5, 6) are wires.

10. Process belt according to one of the preceding claims, ***characterized in that*** the metal fibres (5, 6) comprise magnetic and non-magnetic fibres.

## Revendications

1. Bande de traitement (1) présentant une structure plane (2), sachant que la surface extérieure (7) comporte au moins une fibre de verre (4) et des fibres métalliques (5, 6) sont disposées dans la direction longitudinale (8) de la bande de traitement (1), sachant que les fibres métalliques (5, 6) sont disposées parallèlement à la fibre de verre (4) et comportent un diamètre (10) plus petit que la fibre de verre (4), sachant que la structure plane (2) est un tissu (3), sachant que la fibre de verre (4) ou la fibre métallique (5, 6) forme une chaîne du tissu (3), ***caractérisée en ce qu'***elle est constituée sous la forme d'une bande sans fin avec une surface intérieure et une surface extérieure (7), les fibres de verre (4) forment la surface (7) de la structure plane (2) et les fibres métalliques (5, 6) restent en arrière derrière la surface (7) de la structure plane (2), la structure plane (2) est revêtue sur toute sa surface d'un fluoropolymère et comporte plus de 30 % de surface de passage libre.

2. Bande de traitement selon la revendication 1, ***caractérisée en ce qu'***elle comporte des fibres métalliques (9) passant transversalement à la direction longitudinale (8) de la bande de traitement (1).

3. Bande de traitement selon l'une quelconque des revendications précédentes, ***caractérisée en ce que*** la structure plane (2) comporte une liaison (11) transversalement à la direction longitudinale sur laquelle sont soudées les fibres métalliques (5, 6).

4. Bande de traitement selon l'une quelconque des revendications précédentes, ***caractérisée en ce qu'*** au moins plusieurs des fibres métalliques (5, 6) comportent un oeillet (12).

5. Bande de traitement selon l'une quelconque des revendications précédentes, ***caractérisée en ce que*** la structure plane (2) comporte une liaison (11) transversalement à la direction longitudinale, qui reste en arrière derrière la surface extérieure (7) de la structure plane (2) de telle manière que la bande de traitement (1) ne cause aucune empreinte sur un produit attenant.

6. Bande de traitement selon l'une quelconque des revendications précédentes, ***caractérisée en ce qu*'**une fibre métallique (5, 6) est disposée des deux côtés d'une fibre de verre (4).

7. Bande de traitement selon l'une quelconque des revendications précédentes, ***caractérisée en ce qu*'**une fibre métallique (5, 6) est disposée entre plusieurs fibres de verre (4).

8. Bande de traitement selon l'une quelconque des revendications précédentes, ***caractérisée en ce qu'***au moins plusieurs des fibres de verre (4) sont multifilaires.

9. Bande de traitement selon l'une quelconque des revendications précédentes, ***caractérisée en ce qu***'au moins plusieurs des fibres métalliques (5, 6) sont des fils métalliques.

10. Bande de traitement selon l'une quelconque des revendications précédentes, ***caractérisée en ce que*** les fibres métalliques (5, 6) comportent des fibres magnétiques et non magnétiques.
